# EUROPÄISCHE PATENTSCHRIFT

(11) **EP 1 099 491 B1**
(45) Veröffentlichungstag und Bekanntmachung des Hinweises auf die Patenterteilung: **11.02.2004**
(21) Anmeldenummer: 00116674.3
(22) Anmeldetag: 02.08.2000
(51) Int. Cl.: B21C 37/15, B23D 5/02, B23D 43/00

(54) **Vorrichtung zur Herstellung von Drallnuten in einem Waffenrohr**
Tool for maufacturing grooves in a gun barrel
Dispositif pour fabriquer des rayures dans un tube de canon

(30) Priorität: 16.09.1999 DE 19944378
(43) Veröffentlichungstag der Anmeldung: 16.05.2001
(73) Patentinhaber: Rheinmetall W & M GmbH, 29343 Unterlüss (DE)
(72) Erfinder: Zaeper, Manfred, 29343 Unterlüss (DE); Hogrebe, Klaus, 29320 Hermannsburg (DE)

(56) Entgegenhaltungen:
- DE-C- 649 830
- FR-A- 846 667
- GB-A- 533 519
- US-A- 2 257 438
- US-A- 2 346 581
- US-A- 2 757 580

## Beschreibung

Die Erfindung betrifft eine Vorrichtung zur Herstellung von Drallnuten in einem Waffenrohr, wobei ein um seine Längsachse rotierender Ziehkopf mittels einer Ziehstange durch das jeweilige Waffenrohr hindurchgezogen und die Drallnuten mit entsprechenden, an dem Ziehkopf angeordneten Ziehmessern in die innere Oberfläche des Waffenrohres eingeschnitten werden. Eine Vorrichtung gemäß dem Oberbegriff der Anspruchs 1 ist z.B. aus der US-A-2 257 438 bekannt.

Bei bekannten Vorrichtungen weist der jeweilige Ziehkopf eine der zu erzeugenden Drallnuten entsprechende Anzahl von kronenartigen Ziehmessern auf. Da die Waffenrohre jeweils eine sehr harte Oberfläche besitzen, können die Drallnuten nicht mit einem Ziehvorgang hergestellt werden, sondern der Ziehkopf muß mehrmals durch das Waffenrohr gezogen werden, wobei für jeden Ziehvorgang ein neuer, jeweils längerer (z.B. um 0,04 mm steigender) Satz von Ziehmessern in den Ziehkopf eingesetzt wird. Dieser Vorgang wird so lange fortgesetzt, bis die vorgegebene Tiefe der Drallnuten von z.B. 1,2 mm erreicht ist.

Nachteilig bei dieser bekannten Vorrichtung ist unter anderem, daß durch den Austausch der Ziehmesser das Einbringen von Drallnuten in Waffenrohre außerordentlich zeit- und kostenaufwendig ist.

Der Erfindung liegt die Aufgabe zugrunde, eine Vorrichtung zum Herstellen von Drallnuten anzugeben, mit der diese wesentlich kostengünstiger herstellbar sind als mit den bisher bekannten Vorrichtungen.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, den Ziehkopf mit einem zentralen Verstelldorn zu versehen, durch den alle Ziehmesser gleichzeitig nach außen verschoben werden können. Bei der Herstellung der Drallnuten müssen daher die Ziehmesser nicht mehr zeitaufwendig ausgetauscht werden, sondern es wird lediglich die Einstellung der Ziehmesser mit Hilfe des Verstelldornes geändert.

Zur gleichzeitigen Verschiebung der Ziehmesser stützen sich die die Ziehmesser aufnehmenden Halterungen auf ihrer dem Verstelldorn zugewandten Seite über schräg ausgebildete Endflächen an entsprechenden konusförmig ausgebildeten ringförmigen Bereichen des Verstelldornes ab, derart, daß durch Verschieben des Verstelldornes in axialer Richtung die Halterungen und damit auch die Ziehmesser in radialer Richtung verschoben werden.

Die gesamte Anzahl der Halterungen verteilt sich auf mindestens zwei -in Umfangsrichtung gesehen- ringförmige Bereiche.

Als vorteilhaft hat es sich erwiesen, wenn die Ziehmesser durch die entsprechenden Enden von Wendeplatten gebildet werden. Dadurch ist es möglich, bei einem Verschleiß eines Ziehmessers dieses lediglich durch Umlegen oder Drehen der Wendeplatte durch ein neues Ziehmesser zu ersetzen. Allenfalls muß lediglich die gesamte Wendeplatte ausgetauscht werden und nicht, wie bei den bekannten Vorrichtungen, ein kompletter Kronenaustausch erfolgen.

Ferner muß auch bei einer Änderung des Zugflächenformates kein kompletter Kronenaustausch erfolgen, sondern lediglich ein Austausch der Wendeplatten durchgeführt werden.

Vorzugsweise werden die Wendeplatten oberflächenbeschichtet, so daß durch die Wahl der Oberflächenbeschichtung die innere Oberfläche des Waffenrohres im Bereich der Drallnuten auf einfache Weise an die entsprechenden an sie gestellten Anforderungen angepaßt werden kann.

Weitere Einzelheiten und Vorteile der Erfindung ergeben sich aus dem folgenden anhand von Figuren erläuterten Ausführungsbeispiel. Es zeigen:
- Fig. 1: einen Längsschnitt durch einen Ziehkopf einer erfindungsgemäßen Vorrichtung und
- Fig.2: eine Draufsicht auf den in Fig. 1 dargestellten Ziehkopf.

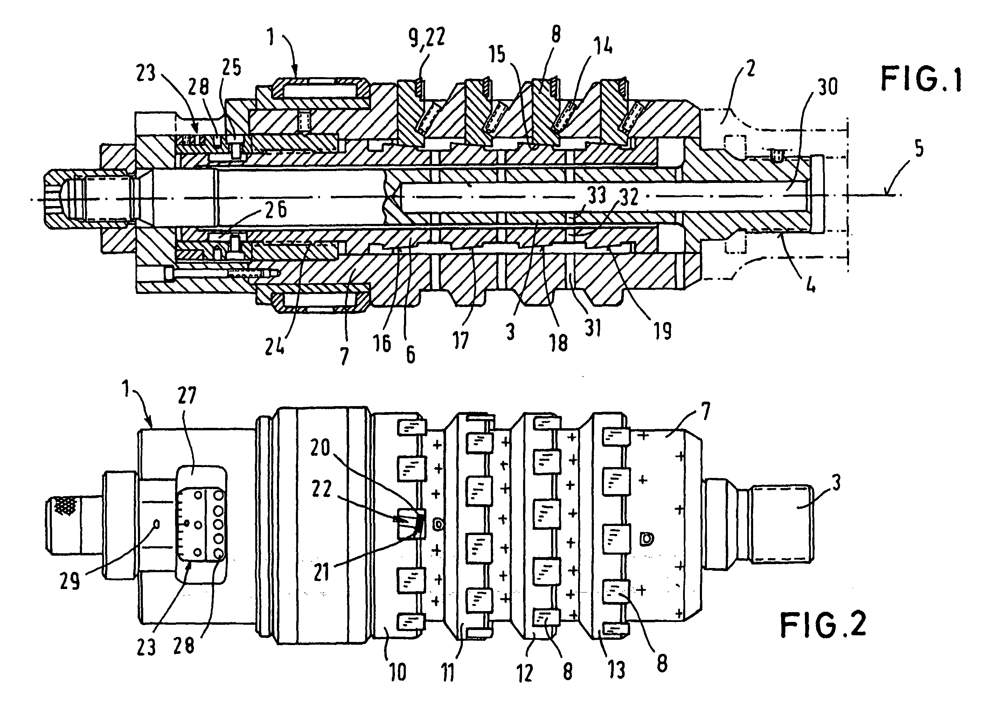

In den Fig. 1 und 2 ist mit 1 ein Ziehkopf zur Herstellung von Drallnuten großkalibriger Waffenrohre bezeichnet (z.B. sollen mit dem dargestellten Ziehkopf 48 Drallnuten in das Waffenrohr eingebracht werden). Der Ziehkopf 1 ist in an sich bekannter Weise mit einer Ziehstange 2 verbunden, deren Endbereich in Fig. durch strichpunktierte Linien angedeutet ist.

Der Ziehkopf 1 umfaßt einen Befestigungsdorn 3, der über eine Schraubverbindung 4 mit der Ziehstange 2 verbunden ist, einen den Befestigungsdorn 3 umfangseitig umschließenden und in Richtung der Längsachse 5 des Ziehkopfes 1 verschiebbar angeordneten Verstelldorn 6 sowie ein den Verstelldorn 6 umfangseitig umschließendes Trägerteil 7.

In dem Trägerteil 7 sind in axialer Richtung verschiebbare Halterungen 8 angeordnet, welche die Ziehmesser 9 zum Einbringen der Drallnuten aufnehmen. Die gesamte Anzahl der Halterungen 8 verteilt sich auf vier -in Umfagsrichtung gesehen- ringförmige Bereiche 10-13, so daß für die 48 einzubringenden Drallnuten pro Ring 12 Halterungen erforderlich sind. Die Halterungen 8 sind in radialer Richtung in dem Trägerteil 7 verschiebbar angeordnet und werden jeweils durch einen federbeaufschlagten Stift 14 gegen den Verstelldem 6 gedrückt. Dabei stützen sich die Halterungen 8 auf ihrer dem Verstelldorn 6 zugewandten Seite über schräg ausgebildete Endflächen 15 an entsprechenden konusförmig ausgebildeten Bereichen 16-19 des Verstelldornes 6 ab, derart, daß durch Verschieben des Verstelldornes 6 in axialer Richtung die Halterungen 8 und damit auch die Ziehmesser 9 in radialer Richtung verschoben werden.

Die Ziehmesser 9 werden jeweils durch die Enden 20, 21 von Wendeplatten 22 gebildet, so daß ein gegebenenfalls erforderlicher Wechsel von einzelnen Ziehmessern 9 durch Vertauschen der entsprechenden Enden 20, 21 der Wendeplatten 22 durchführbar ist.

Zur Verschiebung des zentralen Verstelldornes 6 ist auf der der Ziehstange 2 abgewandten Seite des Ziehkopfes 1 ein zwischen dem Trägerteil 7 und dem Verstelldorn 6 angeordnetes Einstellteil 23 vorgesehen. Dieses ist über eine Gewindeverbindung 24 mit dem Verstelldorn 6 verbunden, derart, daß beim Drehen des Einstellteiles 23 eine entsprechende Verschiebung des Verstelldornes 6 erfolgt. Dabei wird eine Drehbewegung des Verstelldornes 6 durch drehfeste Anschlagsstifte 25 verhindert, die in entsprechende Längsnuten 26 des Verstelldomes 6 eingreifen und bei der Drehbewegung des Einstellteiles 23 gegen die Seitenwände der Längsnuten 26 gedrückt werden.

Um das Einstellteil 23 drehen zu können, ist eine Ausnehmung 27 in dem Trägerteil 7 vorgesehen, durch welche das Einstellteil 23 von außen zugänglich ist. Zum Drehen des Einstellteiles 23 wird ein stiftförmiges Werkzeug (nicht dargestellt) in eine entsprechende Sacklochbohrung 28 eingeführt und das Einstellteil 23 mit diesem Werkzeug so lange verdreht, bis die Bohrung 28 mit einer drehfesten Null-Marke 29 übereinstimmt, so daß alle Ziehmesser 9 gleichzeitig um einen genau definierten Hub nach außen verschoben werden. Entlang des äußeren Umfanges des Einstellteiles 23 sind mehrere nebeneinander angeordnete Sacklochbohrungen 28 vorgesehen, wobei der jeweilige Abstand einem definierten Vorschub der Ziehmesser 9 entspricht (z.B. 0,04 mm).

In dem Befestigungsdorn 3 ist ferner eine axiale Bohrung 30 angeordnet, durch welche bei dem Ziehvorgang ein Kühlschmiermittel in seitliche Kanäle 31-33 gelangt, die sich durch die Seitenwände des Befestigungsdornes 3, des Verstelldornes 6 und des Trägerteiles 7 bis in den Bereich der Ziehmesser 9 erstrecken.

Bei der Herstellung der Drallnuten des Waffenrohres werden die Halterungen 8 so weit in das Trägerteil 7 hineinverschoben, daß die Ziehmesser 9 die Waffenrohrinnenwandung gerade kontaktieren. Nach dem ersten Ziehvorgang werden dann die Ziehmesser 9 zentral durch Verdrehen des Einstellteiles 23 und damit durch Verschieben des Verstelldornes 6 um weitere 0,04 mm nach außen verschoben. Dieser Vorgang wird so lange fortgesetzt, bis die Drallnuten ihre endgültige Tiefe (von z.B. 2 mm) erreicht haben.

### Bezugszeichenliste

- 1: Ziehkopf
- 2: Ziehstange
- 3: Befestigungsdorn
- 4: Schraubverbindung
- 5: Längsachse
- 6: Verstelldorn
- 7: Trägerteil
- 8: Halterung
- 9: Ziehmesser
- 10-13: ringförmige Bereiche, Ringe
- 14: Stift
- 15: Endfläche (Halterung)
- 16-19: konusförmige Bereiche (Verstelldorn)
- 20,21: Enden (Wendeplatte)
- 22: Wendeplatte
- 23: Einstellteil
- 24: Gewindeverbindung
- 25: Anschlagsstift
- 26: Längsnut
- 27: Ausnehmung
- 28: Sacklochbohrung, Bohrung
- 29: Null-Marke
- 30: Bohrung
- 31-33: Kanäle

## Patentansprüche

1. Vorrichtung zur Herstellung von Drallnuten in einem Waffenrohr, wobei ein um seine Längsachse (5) rotierender Ziehkopf (1) mittels einer Ziehstange (2) durch das jeweilige Waffenrohr hindurchgezogen und die Drallnuten mit entsprechenden, an dem Ziehkopf (1) angeordneten Ziehmessern (9) in die innere Oberfläche des Waffenrohres eingeschnitten werden, mit den Merkmalen:
a) der Ziehkopf (1) umfaßt einen mit der Ziehstange (2) verbindbaren zentralen Befestigungsdorn (3), einen den Befestigungsdorn (3) umfangseitig mindestens in einem Teilbereich umschließenden und in Richtung der Längsachse (5) des Ziehkopfes (1) verschiebbar angeordneten Verstelldorn (6) sowie ein den Verstelldorn (6) umfangseitig mindestens in einem Teilbereich umschließendes Trägerteil (7), in dem die die Ziehmesser (9) aufnehmenden Halterungen (8) angeordnet sind;
b) die Halterungen (8) sind radial nach außen verschiebbar in dem Trägerteil (7) angeordnet und stützen sich auf ihrer dem Verstelldorn (6) zugewandten Seite über schräg ausgebildete Endflächen (15) an entsprechenden konusförmig ausgebildeten Bereichen (16-19) des Verstelldornes (6) ab, derart, daß durch Verschieben des Verstelldornes (6) in axialer Richtung die Halterungen (8) und damit auch die Ziehmesser (9) in radialer Richtung verschoben werden; **dadurch gekennzeichnet daß** :
c) die Halterungen (8) jeweils gegen den Druck einer Feder radial nach außen verschiebbar in dem Trägerteil (7) angeordnet sind, und
d) die gesamte Anzahl der Halterungen (8) sich auf mindestens zwei -in Umfangsrichtung gesehen- ringförmige Bereiche (10-13) des Trägerteiles (7) verteilt.

2. Vorrichtung nach Anspruch 1, **dadurch gekennzeichnet, daß** die Ziehmesser (9) jeweils durch die Enden (20,21) von Wendeplatten (22) gebildet werden, so daß ein Wechsel der Ziehmesser (9) durch Vertauschen der entsprechenden Enden (20,21) der Wendeplatte (22) durchführbar ist.

3. Vorrichtung nach Anspruch 1 oder 2, **dadurch gekennzeichnet, daß** zur Verschiebung des Verstelldornes (6) auf der der Ziehstange (2) abgewandten Seite des Ziehkopfes (1) ein Einstellteil (23) angeordnet ist, welches über eine Gewindeverbindung (24) mit dem Verstelldorn (6) verbunden ist, derart, daß beim Drehen des Einstellteiles (23) eine entsprechende Verschiebung des Verstelldornes (6) erfolgt.

4. Vorrichtung nach Anspruch 3, **dadurch gekennzeichnet, daß** das Einstellteil (23) zwischen dem Trägerteil (7) und dem Verstelldorn (6) angeordnet und durch eine Ausnehmung (27) des Trägerteiles (7) von außen zugänglich ist.

5. Vorrichtung nach einem der Ansprüche 1 bis 4, **dadurch gekennzeichnet, daß** jeder Halterung (8) ein federbeaufschlagter Stift (14) zugeordnet ist, der die Halterung (8) gegen den Verstelldorn (6) drückt.

6. Vorrichtung nach einem der Ansprüche 1 bis 5, **dadurch gekennzeichnet, daß in dem** Befestigungsdorn (3) eine axiale Bohrung (30) angeordnet ist, durch welche bei dem Ziehvorgang ein Kühlschmiermittel in seitliche Kanäle (31-33) gelangt, die sich durch die Seitenwände des Befestigungsdornes (3), des Verstelldornes (6) und des Trägerteiles (7) bis in den Bereich der Ziehmesser (9) erstrecken.

## Claims

1. Apparatus for manufacturing rifling grooves in a gun barrel, wherein a drawing head (1) rotating about its longitudinal axis (5) is drawn by means of a drawing rod (2) through the respective gun barrel and the rifling grooves are cut into the inner surface of the gun barrel by means of corresponding drawing knives (9) disposed on the drawing head (1), having the features:
a) the drawing head (1) comprises a central fastening mandrel (3) connectable to the drawing rod (2), an adjusting mandrel (6) surrounding the periphery of the fastening mandrel (3) at least in a sub-region and disposed so as to be displaceable in the direction of the longitudinal axis (5) of the drawing head (1), as well as a carrier part (7), which surrounds the periphery of the adjusting mandrel (6) at least in a sub-region and in which the holding devices (8) for receiving the drawing knives (9) are disposed;
b) the holding devices (8) are disposed in the carrier part (7) so as to be displaceable in a radially outward direction and are supported at their side facing the adjusting mandrel (6) via obliquely constructed end faces (15) against corresponding cone-shaped regions (16-19) of the adjusting mandrel (6), such that by displacing the adjusting mandrel (6) in axial direction the holding devices (8) and hence also the drawing knives (9) are displaced in radial direction; **characterized in that**:
c) the holding devices (8) are disposed in the carrier part (7) so as to be displaceable in a radially outward direction in each case counter to the pressure of a spring, and
d) the total number of holding devices (8) is apportioned to at least two - viewed in peripheral direction - annular regions (10-13) of the carrier part (7).

2. Apparatus according to claim 1, **characterized in that** the drawing knives (9) are formed in each case by the ends (20, 21) of indexable inserts (22), so that a change of the drawing knives (9) is effectable by transposing the corresponding ends (20, 21) of the indexable insert (22).

3. Apparatus according to claim 1 or 2, **characterized in that** for displacement of the adjusting mandrel (6) there is disposed on the end of the drawing head (1) remote from the drawing rod (2) a setting part (23), which is connected by a threaded connection (24) to the adjusting mandrel (6), such that, when the setting part (23) is rotated, a corresponding displacement of the adjusting mandrel (6) is effected.

4. Apparatus according to claim 3, **characterized in that** the setting part (23) is disposed between the carrier part (7) and the adjusting mandrel (6) and is accessible from the outside through a recess (27) of the carrier part (7).

5. Apparatus according to one of claims 1 to 4, **characterized in that** associated with each holding device (8) is a spring-loaded pin (14), which presses the holding device (8) towards the adjusting mandrel (6).

6. Apparatus according to one of claims 1 to 5, **characterized in that** disposed in the fastening mandrel (3) is an axial bore (30), through which during the drawing operation a cooling lubricant passes into lateral channels (31-33), which extend through the side walls of the fastening mandrel (3), of the adjusting mandrel (6) and of the carrier part (7) into the region of the drawing knives (9).

## Revendications

1. Dispositif pour fabriquer des rayures dans un tube de canon, une tête de tirage (1) pivotant autour de son axe longitudinal (5) étant tirée au moyen d'une barre de tirage (2) au travers du canon respectif, et les rayures étant découpées dans la surface intérieure du canon avec des outils de rainurage (9) correspondants, disposés sur la tête de tirage (1), présentant les caractéristiques suivantes :
la tête de tirage (1) comprend une broche de fixation (3) centrale pouvant être raccordée à la barre de tirage (2), un mandrin de réglage (6) entourant la broche de fixation (3) du côté périphérique au moins sur une partie et disposé de manière déplaçable dans le sens de l'axe longitudinal (5) de la tête de tirage (1), ainsi qu'une partie support (7) , dans laquelle sont disposées des fixations (8) logeant les outils de rainurage (9), entourant le mandrin de réglage (6) du côté périphérique au moins dans une partie,
les fixations (8) sont disposées de manière déplaçable radialement vers l'extérieur dans la partie support (7), et s'appuient, par leur côté tourné vers le mandrin de réglage (6), à l'aide de surfaces terminales (15) conçues de manière oblique (6-19) du mandrin de réglage (6) en forme de cône de manière correspondante, de telle sorte que les fixations (8) et donc également les outils de rainurage (9) sont déplacés en sens radial par le déplacement du mandrin de réglage (6) en sens axial, **caractérisé en ce que**
les fixations (8) sont disposées dans la partie support (7) de manière déplaçable radialement vers l'extérieur respectivement contre la pression d'un ressort, et
le nombre total des fixations (8) se répartit sur au moins deux zones (10-13) de la partie support (7) de forme annulaire - vues dans le sens périphérique.

2. Dispositif selon la revendication 1, **caractérisé en ce que** les outils de rainurage (9) sont respectivement formés par les extrémités (20, 21) de plaques modèles à double face (22), de sorte qu'un changement des outils de rainurage (9) peut être réalisé en échangeant les extrémités correspondantes (20, 21) des plaques modèles à double face (22).

3. Dispositif selon la revendication 1 ou 2, **caractérisé en ce qu'**une partie d'ajustement (23) est disposée sur le côté de la tête de tirage (1) détourné de la barre de tirage (2) pour déplacer le mandrin de réglage (6), laquelle partie d'ajustement est raccordée au mandrin de réglage (6) à l'aide d'un raccord fileté (24) de telle sorte que lorsque la partie d'ajustement (23) pivote, un déplacement correspondant du mandrin de réglage (6) a lieu.

4. Dispositif selon la revendication 3, **caractérisé en ce que** la partie d'ajustement (23) est disposée entre la partie support (7) et le mandrin de réglage (6) et est accessible depuis l'extérieur par un évidement (27) de la partie support (7).

5. Dispositif selon l'une quelconque des revendications 1 à 4, **caractérisé en ce qu'**à chaque fixation (8) est associée une broche (14) contrainte par ressort, qui presse la fixation (8) contre le mandrin de réglage (6).

6. Dispositif selon l'une quelconque des revendications 1 à 5, **caractérisé en ce qu'**un alésage axial (30) est amenagé dans la broche de fixation (3), par lequel alésage un lubrifiant accède lors du processus de tirage dans des canaux latéraux (31-33) qui s'étendent au travers des parois latérales de la broche de fixation (3), du mandrin de réglage (6) et de la pièce support (7) jusque dans la partie des outils de rainurage (9).
